# EUROPÄISCHE PATENTSCHRIFT

(11) **EP 3 282 822 B1**
(45) Veröffentlichungstag und Bekanntmachung des Hinweises auf die Patenterteilung: **12.06.2019**
(21) Anmeldenummer: 16724276.7
(22) Anmeldetag: 15.04.2016
(51) Int. Cl.: A01C 7/10, A01C 7/04, A01C 7/20

(54) **LANDWIRTSCHAFTLICHE EINZELKORNSÄMASCHINE**
AGRICULTURAL SINGLE GRAIN SEEDER
SEMOIR AGRICOL MONOGRAINE

(30) Priorität: 15.04.2015 DE 102015105790
(43) Veröffentlichungstag der Anmeldung: 21.02.2018
(73) Patentinhaber: Lemken GmbH & Co. KG, 46519 Alpen (DE)
(72) Erfinder: GEBBEKEN, Martin, 46519 Alpen (DE); BERGERFURTH, Dennis, 46459 Rees (DE); BERENDSEN, Mark, 7044 AJ Lengel (NL); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE); VAN KANN, Andreas, 53949 Dahlem (DE); DÜPMANN, Jörg, 46499 Hamminkeln (DE)
(86) Internationale Anmeldenummer: PCT/DE2016/100180
(87) Internationale Veröffentlichungsnummer: WO 2016/165697

(56) Entgegenhaltungen:
- EP-A1- 2 227 932
- EP-A2- 2 044 828
- WO-A1-2011/113159
- DE-A1-102007 031 576

## Beschreibung

Die Erfindung betrifft eine landwirtschaftliche Einzelkornsämaschine mit Saatgutsensor gemäß dem Oberbegriff des Patentanspruches 1. Landwirtschaftliche Verteilmaschinen zur Ausbringung von kornförmigen Material sind oft mit Durchfluss- oder Partikelsensoren versehen, um die Anzahl von ausgebrachten Körnern zu zählen oder Verstopfungen im Ausbringleitungssystem zu erkennen. Dabei sind den einzelnen Leitungen geeignete Sensoren zugeordnet, welche eigens über Auswerteeinheiten verfügen, welche über einen Kabelbaum mit einer Anzeige- oder Datenerfassungseinheit verbunden sind. Einen Überblick über die Funktion solcher Überwachungssysteme schafft der Artikel "Späte Überraschungen Ausgeschlossen" der Zeitschrift "profi 01/2015, erschienen im Landwirtschaftsverlag Münster. Aufbau und Funktion, beispielsweise eines optischen Matrixzählers, ist in der deutschen Offenlegungsschrift DE3419883A1 erklärt. Die EP 2 044 828 A2 zeigt eine zentrale Dosiereinheit mit mehreren einzeln nebeneinander angeordneten Saatgutsensoren, von welchen flexible Leitungen in die örtlich versetzten und beweglichen Ausbringschare führen.

Aufgabe der Erfindung ist es, solche Durchfluss- oder Partikelsensoren kostengünstig auf eine Einzelkornsämaschine zu adaptieren, welche mit einer Vereinzelungseinheit mehrere Saatgutreihen bedient. Dabei soll der Verkabelungsaufwand reduziert und die Betriebssicherheit erhöht werden.

Diese Aufgabe wird durch die Merkmale des kennzeichnenden Teiles des Anspruches 1 gelöst. Da mehrere Auslassöffnungen zwangsläufig voneinander beabstandet sind, wird durch Anordnung mehrerer Detektoren in einem gemeinsamen Gehäuse eine Lagefixierung, insbesondere eine Verdrehsicherung, der Detektoren zu den einzelnen Auslassöffnungen erreicht. Da die Signalauswerteeinheit kostengünstig mit mehreren Signaleingängen hergestellt werden kann, wird diese inklusive der erforderlichen Signalverbindungsleitungen zu den Detektoren gleich mit im Gehäuse untergebracht und geschützt. Ebenso kann über einen Multiplex-Vorgang ein Signaleingang der Auswerteeinheit mehrere Detektoren zeitlich nacheinander abfragen. Nur eine einzelne Kommunikations- und/oder Energieversorgungsleitung ist je Gehäuse und Vereinzelungseinheit erforderlich.

Durch Integration der Detektoren und der Auswerteeinheit auf einer gemeinsamen Leiterplatte, beispielsweise einer PCB-Anordnung (printed circuit board), wird eine extrem kostengünstige Herstellweise bei gleichzeitig definierter Anordnung der Detektoren erreicht. Durch Verguss der Schaltung innerhalb des Gehäuses, beispielsweise mit einem Isolierharz, wird eine maximale Betriebssicherheit erreicht.

Werden die Detektoren beispielsweise ringförmig oder als Gatter ausgeführt, kann der Saatgutstrom durch eine ungeteilte, mit Aus- oder Durchbrüchen versehene Leiterplatte geführt werden.

Durch Anordnung der Ausbrüche der Leiterplatte im mittigen Abstand der Saatgutauslässe und/oder der Furchenöffner wird eine direkte Saatgutführung von der Vereinzelungseinrichtung in die Furchenöffner erreicht, welche Kollisionen der Saatkörner mit Berandungen weitgehend vermeidet und höchste Detektionsgenauigkeit sichert.

Die Erfindung hat sich im Einbau auf einer Reiheneinheit mit mehreren Furchenöffnern, auf dem eine gemeinsame Vereinzelungseinrichtung je Reiheneinheit aufgebaut ist, im praktischen Versuch bewährt.

Durch Kommunikation der Auswerteeinheiten mit einem gemeinsamen Prozessleitrechner der Einzelkornsämaschine kann jede Reiheneinheit überwacht und/oder in seinen Ausbringparametern geregelt werden. Die Kommunikation kann drahtlos oder über einen Datenbus erfolgen. Gerade in der Buslösung kann über einen gemeinsamen Kabelbaum sowohl die Antriebssteuerung beispielsweise elektrischer Vereinzelungsantriebe je Reiheneinheit sowie die Kommunikation und Energieversorgung gemeinsam und reihenspezifisch erfolgen.

Versieht man das Detektorgehäuse mit Kupplungen, können auf schnelle Weise Gehäuse, Leitungen oder das Vereinzelungsaggregat ganz oder teilweise geöffnet oder (de-)montiert werden.

Werden die Kupplungsflächen mit einer zusätzlichen Haltevorrichtung, welche beispielsweise als schwenkbarer Clip oder Hebel am Detektorgehäuse angebracht ist, versehen, bildet das Detektorgehäuse selbst eine Kupplungsschnittstelle zwischen Vereinzelungsaggregat und Furchenöffnern. Die konische Form der Kupplungsflächen wird von dem Haltelement zumindest teilweise umschlungen und dichtet die Kupplungselemente axial und turbulenzarm ab, was der Mess- und Detektionsgenauigkeit zu Gute kommt.

Die Erfindung zeichnet sich insbesondere dadurch aus, dass die Durchfluss- und Partikelsensoren, sogenannte Detektoren, mehrerer Verteilleitungen in einem gemeinsamen Gehäuse ortsfest und geschützt gemeinsam mit einer Signalauswerteeinheit kostengünstig untergebracht sind.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 den schematischen Aufbau einzelner Komponenten einer Reiheneinheit einer landwirtschaftlichen Einzelkornsämaschine,
Fig. 2 ein Gehäuse, welches die Signalauswerteeinheit und die Detektoren beinhaltet,
Fig.3 eine Anordnung von zwei Detektoren und einer Signalauswerteeinheit auf einer gemeinsamen Leiterplatte und
Fig.4 den Aufbau einer Kupplungsvorrichtung zwischen Auslassöffnung, Gehäuse und Leitkanal.

Fehlende Bezugszeichen in den Figuren, deren Komponenten der Übersichtlichkeit halber weggelassen wurden, finden sich in den jeweils anderen Figuren wieder und sind heranzuziehen.

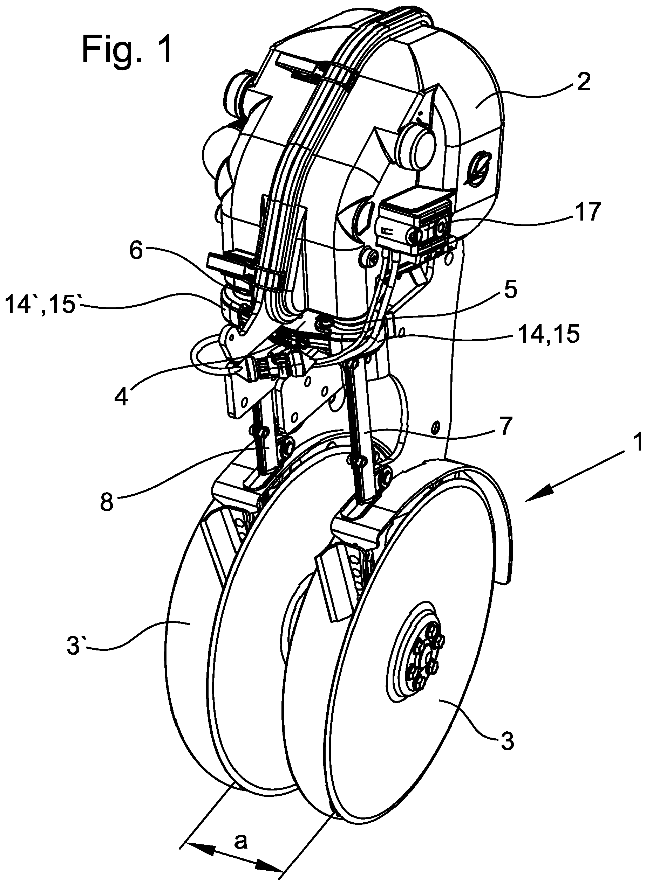

Figur 1 zeigt den prinzipiellen Aufbau der vorgeschlagen Erfindung, bestehend aus Reiheneinheit 1, welche mehrfach seitlich nebeneinander und vertikal beweglich an einem Tragrahmen der Einzelkornsämaschine angeordnet ist. Aus einer Vereinzelungseinheit 2, welche extern über einen Gebläseluftstrom mit Saatgut befüllt und mit einem Über- oder Unterdruck beaufschlagt wird, werden einzelne Saatgutkörner aus der Vereinzelungseinheit 2 abwechselnd aus Auslässen 5 und 6 durch das gemeinsame Gehäuse 4, welches über Durchgangsöffnungen verfügt, in die darunter verlaufenden Leitkanäle 7, 8 abgegeben, welche in die Furchenöffner 3, 3' münden. Diese sind als rotierende Doppelscheibenschare in einem Abstand a nebeneinander angeordnet und schneiden zwei im Abstand a benachbarte Saatfurchen in den Boden, in welche die Saatgutkörner abwechselnd rechts und links im gleichen Längsabstand abgelegt werden. Der Abstand a beträgt etwa 125 bis 150 mm, der mittlere Abstand der Reiheneinheiten zueinander etwa 750 mm, was der üblichen Anordnung einer Einzelkornsämaschine, beispielsweise für die Maisaussaat entspricht. Andere Reihen- und Furchenweiten sind je nach Anbaukultur zu wählen. Die Vereinzelungseinrichtung wird fahrgeschwindigkeits- oder fahrtstreckenabhängig von einem nicht dargestellten Prozessleitrechner nebst elektrischer Energieversorgung und einer Antriebseinheit 17, hier ein CAN-Busgesteuerter Elektromotor, gesteuert und geregelt. Mit Kupplungen 14, 14' und zugehörigen Halteelementen ist das Gehäuse 4 mit den Auslässen 5, 6 der Vereinzelungseinrichtung 2 und den Leitkanälen 7, 8 in die Saatgutführung eingebunden.

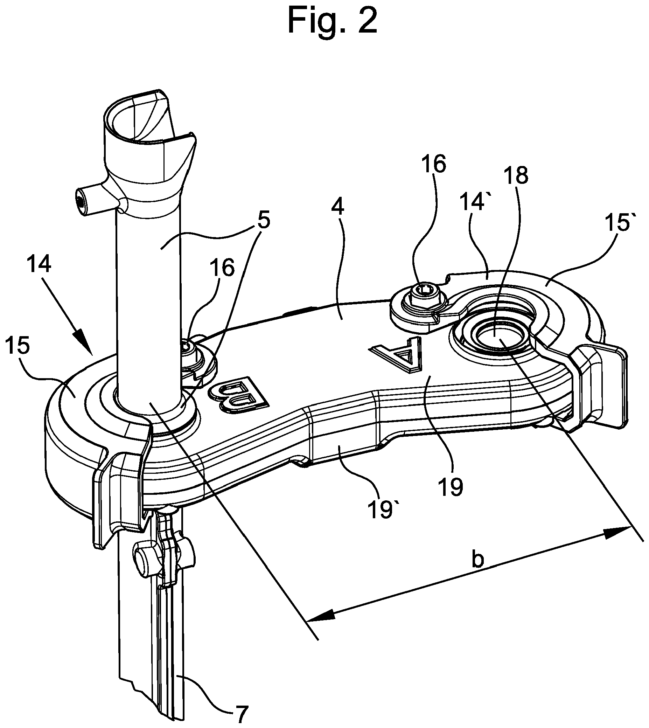

In Figur 2 ist das Gehäuse 4 dargestellt, welches die nicht sichtbare Leiterplatte 12 und die darauf angeordneten Detektoren 9, 10 sowie die Signalauswerteeinheit 11 beinhaltet. Das Gehäuse 4 besteht aus einer oberen und unteren Gehäusehälfte 19, 19', welche spiegelbildlich ineinander geclippt, geklebt oder verschraubt werden. Die Leiterplatte 12 ist sandwichartig dazwischen fixiert. Das Gehäuse besitzt zwei durchgehende Messkanäle 18 im Abstand b, wovon der Kanal 18 auf der B-Seite durch die Auslassöffnung 5, welche aus der Vereinzelungseinrichtung 2 ausführt, verdeckt wird. Der Abstand b entspricht dem Abstand a aus Figur 1. Auf der unteren Seite schließt sich der Leitkanal 7 Richtung Furchenöffner an. Die A-Seite ist zur Übersicht ohne Auslassöffnung 6 und Leitkanal 8 dargestellt. Gut zu erkennen sind die Kupplungen 14, 14' und deren Halteelemente 15, 15', welche die Auslassöffnung 5, 6 und den Leitkanal 7, 8 relativ zum Gehäuse 4 bzw. zum Messkanal 18 in einer möglichen Schwenkbewegung um Schwenkachse 16, welche durch das Gehäuse 4 sticht, fixieren. Die Schwenkachse 16 wird durch einen Bolzen oder eine Schraube mit Mutter gebildet. Der Messkanal 18 besteht aus einem zumindest teilweise lichtdurchlässigen Material und erstreckt sich etwa über die Höhe des Gehäuses 4 und durch die Leiterplatte 12.

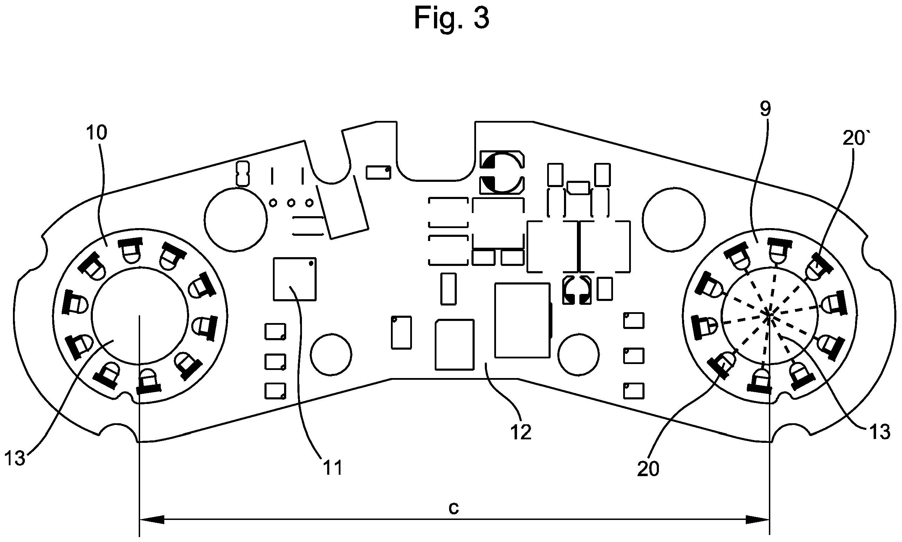

In Figur 3 ist die Draufsicht der Leiterplatte 12 gezeigt, welche neben verschiedenen elektronischen Bauteilen die beiden Detektoren 9, 10 und die Signalauswerteeinheit 11 trägt. Die beiden Detektoren 9, 10 sind konzentrisch um zwei Ausbrüche 13, 13' der Leiterplatte 12, welche im Abstand c angeordnet sind, befestigt und bestehen aus jeweils 10 optischen Sende- und Empfängereinheiten 20, 20', welche jeweils gegenüberliegend und konzentrisch um die Ausbrüche 13, 13' sternförmig angeordnet sind. Jeweils zwei gegenüberliegende Sende- und Empfängereinheiten 20, 20' strahlen sich gegenseitig an und bilden mit den anderen Sende- und Empfängereinheiten ein optisches Sterngatter, durch welche die vereinzelten Saatgut-Körner aus der Vereinzelungseinrichtung mit hoher Geschwindigkeit durchschießen und die Gatterstrahlen unterbrechen. Hierdurch wird der Durchtritt der Saatkörner sicher detektiert. Die Sende- und Empfängereinheiten 20, 20' melden über Leiterbahnen der Leiterplatte 12 und optional zwischengeschaltete Verstärker- oder Triggerelemente den Korndurchtritt in Form eines elektrischen Signals an die Signalauswerteeinheit 11. Die Sende- und Empfängereinheiten 20, 20' werden durch den lichtdurchlässigen Messkanal 18 aus Fig. 2 gegen Verschmutzung, beispielsweise durch Beizstaub des Saatgutes, geschützt. Lässt die Detektionsqualität aufgrund Verschmutzung des Messkanals 18 nach, kann die optische Sendeleistung oder die Empfindlichkeit der Sende- und Empfängereinheiten 20, 20' durch die Signalauswerteeinheit 11 automatisch eingepegelt und geregelt werden, bis eine sichere Detektion wieder gewährleistet ist. Die Kommunikation der Signalauswerteeinheit 11 und die Adressierung seitens des Prozessleitrechners der Einzelkornsämaschine erfolgt beispielsweise über einen Can-Bus, welcher mit einer Steckverbindung aus dem Gehäuse in einen Kabelbaum der Einzelkornsämaschine geführt wird. Vorzugsweise erfolgt über den gleichen Kabelbaum die Energieversorgung der Leiterplatte 12 und seiner Komponenten, ebenso die Antriebsteuerung der Vereinzelungseinrichtungen sowie evtl. Füllstands- Positions- und Drucksensoren. Das Gehäuse und die Leiterplatte werden durch ein Isolierharz oder ähnliches Material gegen äußere Einflüsse geschützt vergossen.

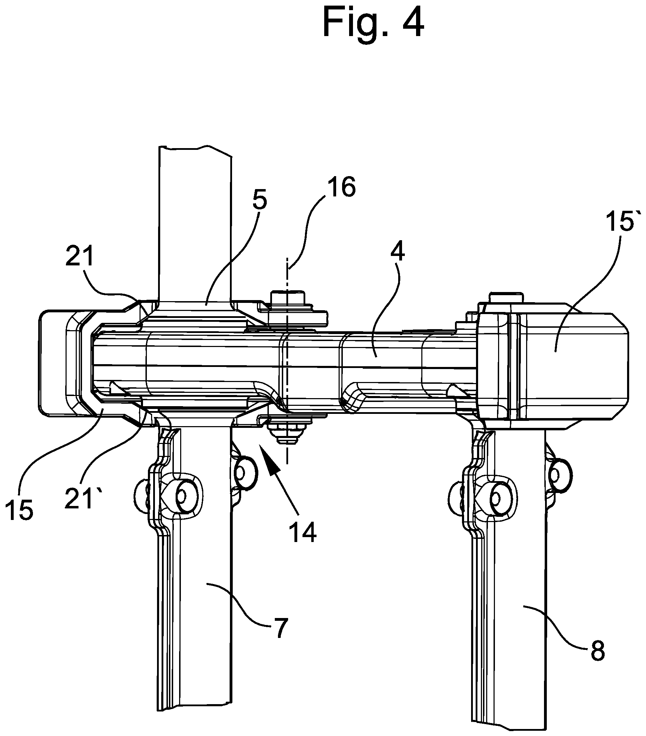

Analog zu Figur 2 ist in Figur 4 nochmal das Befestigungsschema der Kupplung 14 mit Saatgutauslass 5, Leitkanal 7 und Gehäuse 4 gezeigt. Der Saatgutauslass 5 und Leitkanal 7 verfügen gehäuseseits über eine konisch angeformte, umlaufende Bördelkante, deren schräge Flächen 21, 21' von dem Halteelement 15 teilweise umschlossen werden und die Komponenten insbesondere gegen axiale Bewegung sichert bzw. gegeneinander abdichtet. Schwenkt man die Halteelemente 15, 15' um die Schwenkachsen 16 zurück, lässt sich das Gehäuse leicht zwischen den Saatgutauslass 5, 6 und den Leitkanälen 7, 8 herausziehen. Dies ist besonders für eine Reinigung der Messkanäle 18 bei extremer Verschmutzung hilfreich. Die Praxis hat jedoch gezeigt, dass bei glatten Innenflächen der Kanäle und deren Übergänge kaum Strömungsturbulenzen auftreten und eine regelmäßige Reinigung nicht erforderlich ist. Dennoch ist eine gute und schnelle Zugänglichkeit zu allen Komponenten gegeben. Über einen gehäuseseitigen Rastpunkt werden die Haltelemente 15 gegen unbeabsichtigtes Lösen gesichert. Weitere Sicherungs- oder Befestigungselemente sind ebenso denkbar.

**BEZUGSZEICHENLISTE**

| | |
|---|---|
| 1 | Reiheneinheit |
| 2 | Vereinzelungseinrichtung |
| 3 | Furchenöffner |
| 4 | Gehäuse |
| 5 | Auslassöffnung |
| 6 | Auslassöffnung |
| 7 | Leitkanal |
| 8 | Leitkanal |
| 9 | Detektor |
| 10 | Detektor |
| 11 | Signalauswerteeinheit |
| 12 | Leiterplatte, PCB-Anordnung |
| 13 | Ausbruch, Durchbruch |
| 14 | Kupplung |
| 15 | Halteelement |
| 16 | Schwenkachse |
| 17 | Antriebseinheit |
| 18 | Messkanal |
| 19 | Gehäusehälfte |
| 20 | Sende- und Empfangseinheit |
| 21 | Konusschräge |

## Patentansprüche

1. Landwirtschaftliche Einzelkornsämaschine mehreren Reiheneinheiten (1) mit einer Vereinzelungseinrichtung (2), wobei die Vereinzelungseinrichtung (2) über zwei oder mehr separate Auslassöffnungen (5, 6) für vereinzeltes Saatgut verfügt und jeder Auslassöffnung (5, 6) ein Leitkanal (7, 8) und ein Furchenöffner (3, 3') zur Ablage von Saatgut in eine Bodenfurche zugeordnet ist, wobei zwischen der Auslassöffnung (5, 6) und dem Furchenöffner (3, 3') ein Detektor (9, 10) angeordnet ist, welcher die Abgabe eines vereinzelten Saatgutelementes durch die Auslassöffnung (5, 6) in den Furchenöffner (3, 3') detektiert und in ein Signal konvertiert,
**dadurch gekennzeichnet,**
**dass** zumindest zwei Auslassöffnungen (5, 6) eine gemeinsame Signalauswerteeinheit (11) zugeordnet ist und die Signalauswerteeinheit (11) gemeinsam mit den Detektoren (9, 10) in einem Gehäuse (4) untergebracht sind.

2. Landwirtschaftliche Einzelkornsämaschine nach Anspruch 1,
**dadurch gekennzeichnet,**
**dass** die Detektoren (9, 10) und die Signalauswerteeinheit (11) als elektronische Komponenten auf einer gemeinsamen Leiterplatte (12) angeordnet sind.

3. Landwirtschaftliche Einzelkornsämaschine nach Anspruch 2,
**dadurch gekennzeichnet,**
**dass** die Leiterplatte (12) je Detektor (9, 10) über einen Aus- oder Durchbruch (13, 13') verfügt, welchem ein Detektor (9, 10) zugeordnet ist.

4. Landwirtschaftliche Einzelkornsämaschine nach Anspruch 3,
**dadurch gekennzeichnet,**
**dass** der mittige Abstand der Aus- oder Durchbrüche (13, 13') dem mittigen Abstand der Saatgutauslässe (5, 6) der Vereinzelungseinrichtung und/oder dem mittigen Abstand der Furchenöffner (3, 3') entspricht.

5. Landwirtschaftliche Einzelkornsämaschine nach einem der vorstehenden Ansprüche,
**dadurch gekennzeichnet,**
**dass** jeweils ein Paar Furchenöffner (3, 3') mit einer gemeinsamen Vereinzelungseinrichtung (2) und einem gemeinsamen Gehäuse (4) einer Reiheneinheit (1) der landwirtschaftlichen Einzelkornsämaschine zugeordnet ist.

6. Landwirtschaftliche Einzelkornsämaschine nach einem der vorstehenden Ansprüche,
**dadurch gekennzeichnet,**
**dass** der landwirtschaftlichen Einzelkornsämaschine ein Prozessleitrechner zur Anzeige oder Regelung von Prozessparametern der Einzelkornsämaschine zugeordnet ist, wobei der Prozessleitrechner sowie die Signalauswerteeinheiten (11) jeweils über eine Datenübertragungseinrichtung verfügen, welche ausgewertete Signaldaten an den Prozessleitrechner und umgekehrt übertragen.

7. Landwirtschaftliche Einzelkornsämaschine nach einem der vorstehenden Ansprüche,
**dadurch gekennzeichnet,**
**dass** das Gehäuse (4) mit Detektoren (9, 10) und Auswerteeinheit (11) über Kupplungen (14, 14') verfügt, über welche das Gehäuse (4) mit den Saatgutauslässen (5, 6), den Leitkanälen (7, 8) und/oder den Furchenöffnern (3, 3') verbunden ist.

8. Landwirtschaftliche Einzelkornsämaschine nach Anspruch 7,
**dadurch gekennzeichnet,**
**dass** die Kupplung (14, 14') mit einer schwenk- oder clipbaren Haltevorrichtung (15) vorgesehen ist, welche die Saatgutauslässe (5, 6), die Leitkanäle (7, 8) und/oder das Gehäuse (4) an ihren Anschlussenden zumindest teilweise form- und/oder kraftschlüssig umschließt.

9. Landwirtschaftliche Einzelkornsämaschine nach einem der vorstehenden Ansprüche,
**dadurch gekennzeichnet,**
**dass** die Saatgutauslässe (5, 6), die Leitkanäle (7, 8) und/oder das Gehäuse (4) an ihren Anschlussenden mit konisch angeschrägten Flächen versehen sind, wobei zumindest ein in seiner Formgebung zu den konischen Flächen korrespondierendes Halteelement (15) die konischen Flächen zumindest teilweise umschlingt und durch die Konusschrägen (21, 21') eine axiale Halte- oder Dichtkraft auf Saatgutauslässe (5, 6), die Leitkanäle (7,8) und/oder das Gehäuse (4) ausübend ausgebildet ist.

## Claims

1. An agricultural precision seed drill comprising a plurality of row units (1) with a singling device (2), wherein the singling device (2) has two or more separate outlet openings (5, 6) for singled seed and each outlet opening (5, 6) has a guide channel (7, 8) and a furrow opener (3, 3') for depositing seed in a soil furrow, wherein a detector (9, 10) is arranged between the outlet opening (5, 6) and the furrow opener (3, 3'), which detector detects the delivery of an individual seed element through the outlet opening (5, 6) into the furrow opener (3, 3') and converts it into a signal,
**characterised in that**
a common signal evaluation unit (11) is assigned to at least two outlet openings (5, 6) and the signal evaluation unit (11) is accommodated together with the detectors (9, 10) in a housing (4).

2. Agricultural precision seed drill according to claim 1,
**characterised in that**
the detectors (9, 10) and the signal evaluation unit (11) are arranged as electronic components on a common printed circuit board (12).

3. Agricultural precision seed drill according to claim 2,
**characterised in that**
the printed circuit board (12) has a breakout or opening (13, 13') for each detector (9, 10), to which breakthrough or opening a detector (9, 10) is assigned.

4. Agricultural precision seed drill according to claim 3,
**characterised in that**
the central spacing of the breakouts or openings (13, 13') corresponds to the central spacing of the seed outlet openings (5, 6) of the separating device and/or the central spacing of the furrow openers (3, 3').

5. Agricultural precision seed drill according to one of the above requirements,
**characterised in that**
in each case a pair of furrow openers (3, 3') with a common singling device (2) and a common housing (4) is assigned to a row unit (1) of the agricultural precision seed drill.

6. Agricultural precision seed drill according to one of the above claims,
**characterised in that**
the agricultural precision seed drill is assigned a process control computer for displaying or controlling process parameters of the precision seed drill, the process control computer and the signal evaluation units (11) each having a data transmission device which transmits evaluated signal data to the process control computer and vice versa.

7. Agricultural precision seed drill according to one of the above requirements,
**characterised in that**
the housing (4) with detectors (9, 10) and evaluation unit (11) has couplings (14, 14') via which the housing (4) is connected to the seed outlet openings (5, 6), the guide channels (7, 8) and/or the furrow openers (3, 3').

8. Agricultural precision seed drill according to claim 7,
**characterised in that**
the coupling (14, 14') is provided with a pivotable or clipable holding device (15) which at least partially embraces the seed outlet openings (5, 6), the guide channels (7, 8) and/or the housing (4) at their connecting ends in a positive and/or non-positive manner.

9. Agricultural precision seed drill according to one of the above claims,
**characterised in that**
the seed outlet openings (5, 6), the guide channels (7, 8) and/or the housing (4) are provided at their connecting ends with conically bevelled surfaces, at least one retaining element (15) whose shape corresponds to the conical surfaces embracing at least partially around the conical surfaces and an axial retaining or sealing force being exerted on seed outlets (5, 6), the guide channels (7, 8) and/or the housing (4) by the conical bevels (21, 21').

## Revendications

1. Semoir pneumatique de précision agricole comprenant une pluralité d'unités de semis (1) avec un dispositif de séparation (2), dans lequel le dispositif de séparation (2) a deux ou plusieurs ouvertures de sortie (5, 6) pour les semences séparées et chaque ouverture de sortie (5, 6) a un canal de guidage (7, 8) et un ouvreur de sillon (3, 3') pour déposer des semences dans un sillon de sol, dans lequel un détecteur (9, 10) est disposé entre l'ouverture de sortie (5, 6) et l'ouvreur de sillon (3, 3'), lequel détecteur détecte la distribution d'un élément semeur individuel par l'ouverture de sortie (5, 6) dans l'ouvreur de sillon (3, 3') et transforme celui-ci en signal,
**caractérisé en ce**
**qu'**une unité commune d'évaluation de signaux (11) est affectée à au moins deux ouvertures de sortie (5, 6) et l'unité d'évaluation de signaux (11) est incorporée avec les détecteurs (9, 10) dans un boîtier (4).

2. Semoir pneumatique de précision agricole selon la revendication 1,
**caractérisé en ce**
**que** les détecteurs (9, 10) et l'unité d'évaluation de signaux (11) sont disposés en tant que composants électroniques sur une carte de circuit imprimé commune (12).

3. Semoir pneumatique de précision agricole selon la revendication 2,
**caractérisé en ce**
**que** la carte de circuit imprimé (12) présente pour chaque détecteur (9, 10) un perçage ou une ouverture (13, 13'), auquel un détecteur (9, 10) est associé.

4. Semoir pneumatique de précision agricole selon la revendication 3,
**caractérisé en ce**
**que** l'espacement central des ouvertures (13, 13') vers l'extérieur ou de passage correspond à l'espacement central des sorties de semence (5, 6) du dispositif de séparation et/ou à l'espacement central des ouvreurs de sillons (3, 3').

5. Semoir pneumatique de précision agricole selon l'une des affirmations ci-dessus,
**caractérisé en ce**
**qu'**une paire d'ouvreurs de sillons (3, 3') avec un dispositif de séparation commun (2) et un boîtier commun (4) est affectée à chaque fois à une unité de semis (1) du semoir pneumatique de précision agricole.

6. Semoir pneumatique de précision agricole selon l'une des affirmations ci-dessus,
**caractérisé en ce**
**que** le semoir pneumatique de précision agricole se voit affecter un calculateur de commande de processus pour afficher ou commander les paramètres de processus du semoir pneumatique de précision, le calculateur de commande de processus et les unités d'évaluation de signaux (11) ayant chacun un dispositif de transmission de données qui transmet des données de signaux évaluées au calculateur de commande de processus et inversement.

7. Semoir pneumatique de précision agricole selon l'une des affirmations ci-dessus,
**caractérisé en ce**
**que** le boîtier (4) avec des détecteurs (9, 10) et une unité d'évaluation de signaux (11) présente des accouplements (14, 14') par lesquels le boîtier (4) est relié aux sorties de semence (5, 6), aux canaux de guidage (7, 8) et/ou aux ouvreurs de sillons (3, 3').

8. Semoir pneumatique de précision agricole selon la revendication 7,
**caractérisé en ce**
**que** l'accouplement (14, 14') est muni d'un dispositif de retenue (15) pivotant ou clipsable qui entoure au moins partiellement les sorties de semence (5, 6), les canaux de guidage (7, 8) et/ou le boîtier (4) à leurs extrémités de raccordement, de manière à engagement positif et/ou à être solidaire.

9. Semoir pneumatique de précision agricole selon l'une des affirmations ci-dessus,
**caractérisé en ce**
**que** les sorties de semence (5, 6), les canaux de guidage (7, 8) et/ou le carter (4) sont pourvus à leurs extrémités de raccordement de surfaces biseautées coniques, au moins un élément de retenue (15) dont la forme correspond au moins partiellement aux surfaces coniques s'enlacer autour des surfaces coniques et une force axiale de retenue ou de fermeture étant exercée par les surfaces coniques (21, 21') sur les sorties de semence (5, 6), les canaux de guidage (7, 8) et/ou le boîtier (4).
